(19) **Europäisches Patentamt**

**European Patent Office**

**Office européen des brevets**

(11) **EP 1 376 222 B1**

(12) **EUROPEAN PATENT SPECIFICATION**

(45) Date of publication and mention
of the grant of the patent:
**07.06.2006 Bulletin 2006/23**

(51) Int Cl.:
*G03C 1/775* (2006.01)     *B32B 29/00* (2006.01)
*D21H 19/84* (2006.01)

(21) Application number: **03013364.9**

(22) Date of filing: **17.06.2003**

(54) **Support for image recording material**

Träger für Bildaufzeichnungsmaterial

Support pour matériau d'enregistrement d'images

(84) Designated Contracting States:
**DE GB**

(30) Priority: **18.06.2002 JP 2002176798**

(43) Date of publication of application:
**02.01.2004 Bulletin 2004/01**

(73) Proprietor: **FUJI PHOTO FILM CO., LTD.
Minami-Ashigara-shi, Kanagawa (JP)**

(72) Inventor: **Katsura, Seiichirou
Fujinomiya-shi,
Shizuoka-ken (JP)**

(74) Representative: **HOFFMANN EITLE
Patent- und Rechtsanwälte
Arabellastrasse 4
81925 München (DE)**

(56) References cited:
**EP-A- 0 736 393          US-A- 5 362 614**

- **DATABASE WPI Derwent Publications Ltd.,
London, GB; AN 1994-189546 XP002257954 & JP
60 069649 A (MITSUBISHI SEISHI KK), 20 April
1985 (1985-04-20)**
- **PATENT ABSTRACTS OF JAPAN vol. 1997, no.
09, 30 September 1997 (1997-09-30) & JP 09
127646 A (FUJI PHOTO FILM CO LTD), 16 May
1997 (1997-05-16)**
- **DATABASE WPI Derwent Publications Ltd.,
London, GB; AN 1994-337920 XP002257564 & JP
06 262848 A (OJI PAPER COMPANY), 20
September 1994 (1994-09-20)**

Remarks:
The file contains technical information submitted after
the application was filed and not included in this
specification

EP 1 376 222 B1

## Description

The present invention relates to a support for image recording material, and specifically, to a support for image recording material having excellent surface smoothness and size property.

Description of the Related Art

In order to achieve rapid development processing of a photographic printing paper, a waterproof support for a photographic printing paper has conventionally been utilized, in which both surfaces of the paper are coated with a polyolefin, such as polyethylene. Surface configurations of photographic printing papers using the waterproof support include a glossy surface, a mat surface or a surface with a silk-finish pattern or other patterns. These surface configurations are a result of patterns formed on a surface of a polyethylene layer on a photographic emulsion side of the support, which appear on the surface of photographic printing paper.

Among the surface configurations, a smooth glossy surface with absolutely no surface pattern is most widely preferred. As a photographic printing paper having a surface having a mirror-like surface, a photographic printing paper which uses baryta paper, and to which ferrotype is applied during a drying step, which is a final step of the developing process, is known.

In contrast, the photographic paper with the waterproof support does not undergo ferrotype finishing, so the surface of the photographic printing paper that is coated with the photographic emulsion appears as it is and does not have a mirror-like surface like the photographic printing paper that uses baryta paper.

In making a waterproof support, the most common coating method using polyethylene is extrusion coating in which polyethylene molten at a high temperature is flow-coated on a surface of conveyed paper.

As a method for improving surface smoothness of a polyethylene-coated paper produced by extrusion coating, it has been proposed that the coated polyethylene layer be made thicker, and that pressure applied against the paper during polyethylene coating be increased. However, the proposed methods have disadvantages of insufficient improvement in smoothness of a support, and increased cost.

On the other hand, since a thickness of a photographic emulsion layer on the photographic printing paper is extremely thin at approximately 10 $\mu$m, the surface smoothness of the photographic printing paper is almost equivalent to the surface smoothness of the support. Therefore, in order to obtain a photographic printing paper with fine surface smoothness, the surface of the support needs to be made smoother.

Various methods have been proposed for improving surface smoothness of a base paper used as a photographic printing paper support. In one example, pulp obtained from raw chips including those obtained from maple trees is used. For such pulp, a weight-average fiber length, a number-average fiber length, a number-average fiber wall thickness, and the like are restricted to within specific ranges (Japanese Patent Application Publication (JP-B) No. 6-48357).

However, photographic pulp produced from wood such as maple is more costly than general pulp, and is problematic in terms of providing inexpensive photographic printing paper.

Japanese Patent Application Laid-Open (JP-A) No. 9-127646 proposes a method of using kraft pulp made from aspen, in which water retention value and a blending ratio thereof are restricted. However, the only way to improve the surface smoothness after lamination is to increase an amount of resin such as polyethylene.

Another method is proposed in JP-A No. 6-295012 is to use an epoxidized higher fatty acid amide and/or an alkylketene dimer to produce a sheet with high size property. However, it is difficult to produce photographic printing paper with high size property using kraft pulp made from acacia. This is because neutral sizing agents are hard to develop due to a unique resin component in acacia kraft pulp. US-A-5 362 614 discloses a photographic printing paper support which comprises a raw paper being made from pulp slurry containing an epoxidized fatty acid amido and an anionic polyacrylamido.

SUMMARY OF THE INVENTION

In consideration of the circumstances described above, an object of the present invention is to provide an image recording support which is excellent in smoothness and size property, using kraft pulp made from acacia.

The object of the invention is achieved by providing the following image recording support.

Namely, a first aspect of the invention provides a support for image recording material (I), comprising a base paper, both surfaces of which are coated with at least one of a polyolefin resin and a polyester resin, wherein the base paper contains kraft pulp made from acacia as a component thereof and an anionic polyacrylamide in an amount of 0.05 to 1.5 % by mass and an epoxidized fatty acid amide in an amount of 0.05 to 0.8 % by mass.

A second aspect of the invention provides a support for image recording material (I), wherein pulp constituting the base paper contains the pulp made from acacia in an amount of 25 to 100 % by mass.

A third aspect of the invention provides a support for image recording material (I), wherein the kraft pulp made from acacia is beaten so that a water retention value thereof is in a range of 150 to 180%.

A fourth aspect of the invention provides a support for image recording material (I), wherein the base paper is calendered at a temperature in a range of 50 to 250°C under a pressure in a range of 50 to 300 kg/cm.

A fifth aspect of the invention provides a support for image recording material (I), wherein a layer made of the polyolefin resin and having a thickness in a range of 15 to 40 $\mu$m is provided on the base paper.

An sixth aspect of the invention provides a support for image recording material (I), wherein the base paper is subjected to a corona discharge treatment, a flame treatment, a glow discharge treatment or a plasma treatment before the base paper is coated with the polyolefin resin.

A seventh aspect of the invention provides a support for image recording material (I), on which a back-coat layer is provided.

A eighth aspect of the invention provides a support for image recording material (I), wherein the base paper contains an alkylketene dimer in an amount of 0.1 to 0.6 % by mass.

A ninth aspect of the invention provides a support for image recording material (II), wherein a molecular weight of the anionic polyacrylamide is in a range of 100,000 to 1,000,000.

DESCRIPTION OF THE PREFERRED EMBODIMENTS

The present invention provides a support for image recording material containing a base paper, both surfaces of which are coated with a polyolefin resin and/or a polyester resin. The base paper contains kraft pulp made from acacia, in which 0.5 to 1.5% by mass of an anionic polyacrylamide, and 0.05 to 0.8% by mass of an epoxidized fatty acid amide are contained.

A detailed description of the invention will be given below.

The base paper used in the support for image recording material according to the invention comprises the kraft pulp made from acacia, and pulp other than the kraft pulp made from acacia included in the pulp of the base paper is natural pulp made from a tree selected from the group consisting of a coniferous tree and broad-leaved trees, and the like, such as aspen, maple, poplar, birch, alder, oak, eucalyptus, pine, hemlock and others.

The base paper of the invention preferably comprises pulp containing the kraft pulp made from acacia in an amount of 25 to 100% by mass. Improvement in both smoothness and size property of the support is sufficiently achieved with a blending ratio of the kraft pulp made from acacia in a range of 25 to 100% by mass in the pulp of the base paper.

A production process for the kraft pulp made from acacia of the invention is not specifically limited, but a common production process for kraft pulp can be widely employed, details of which are described below.

The kraft pulp made from acacia is beaten so that water retention value is in the range of 150 to 180%. Herein, water retention value is expressed by the following equation, parameters of which are obtained and defined as follows. A pulp suspension of beaten pulp is suction-filtered with a proper filtration vessel called a centrifugal cup. Thereafter, pulp remaining in the vessel is put into a precipitation tube together with the vessel and is subjected to centrifugal separation under prescribed conditions for a prescribed amount of time. The thus dehydrated pulp is taken out to be weighed, and then dried at 105°C to obtain an absolute dry mass, wherein a mass after the centrifugal separation is defined as A and a mass in an absolute dry state is defined as B:

[Equation 1]

$$\text{Water retention value (\%)} = (A - B)/B \times 100$$

In the invention, the kraft pulp made from acacia is beaten with a disk refiner or the like so that water retention value obtained from the above equation is in the range of 150 to 180%. Meanwhile, the pulp other than the kraft pulp made from acacia is separately prepared and the separately prepared pulp is blended into the kraft pulp made from acacia. If the water retention value of the kraft pulp made from acacia is under 150%, softening of pulp fibers is insufficient, and thus improvement in smoothness is insufficient. On the other hand, water retention value exceeding 180 % is also undesirable, as insufficient dehydration and increased usage of dry steam occur on wires of a paper making machine.

If necessary, fillers, such as clay, talc, calcium carbonate, and urea resin fine particle; sizing agents, such as rosin, alkyketene dimer, higher fatty acid, an epoxidized fatty acid amide, paraffin wax, and an alkenylsuccinic acid; paper strength agents, such as starch, polyamide polyamine epichlorohydrin, and polyacrylamide; and fixing agents such as aluminum sulfate and a cationic polymer are added to the blended pulp.

A slurry of pulp adjusted as described above is subjected to paper making. The paper making process includes a step of pressing a web surface side corresponding to a surface to be coated with a photographic emulsion of base paper to a drum dryer cylinder through a dryer canvas pressed thereto to dry a pulp sheet, wherein a tensile force of the dryer canvas is adjusted in the range of 1.5 to 3 kg/cm during drying.

At least one of polyvinyl alcohol or a modified derivative thereof; starch; a fluorescent whitening agent such as diaminostilbene disulfonic acid; and a chloride of a polyvalent metal, such as calcium chloride, magnesium chloride, or aluminum chloride, can be coated on the surface (of one or both sides) of the base paper dried as described above.

No specific limitations are imposed on a type and a thickness of the base paper substrate, but a basic weight thereof is preferably in the range of 50 g/m$^2$ to 250 g/m$^2$. Moreover, for planarity of a photographic printing paper, a support excellent in surface smoothness and surface planarity is preferable. Therefore, preferably a surface treatment is performed thereon at a temperature in the range of 50 to 250°C under a pressure in the range of 50 to 300 kg/cm using a machine calender, a super calender, a soft calendar or the like.

In the present invention, resin provided on both surfaces of the base paper substrate is a polyolefin resin and/or a polyester resin. Specific examples of the polyolefin resin include homopolymers of α-olefins, such as polyethylene and polyolefin, and mixtures of various kinds of such homopolymers. Particularly preferable polylefins are a high-density polyethylene, a low-density polyethylene, and a mixture thereof. Further, a polyolefin layer of a thickness in the range of 15 to 40 μm is preferred.

A polyolefin resin coat layer on a surface (a front surface) on which a photographic emulsion layer is to be formed contains titanium oxide in an amount of 5 to 25% by mass. While a crystalline form of the titanium oxide may be either of an anataze type or a rutile type, the anataze type is preferable in a case where priority is given to whiteness. In a case where priority is given to both whiteness and sharpness, the rutile type is preferably used. A mixture of the anataze type and the rutile type may be used when consideration is made to both whiteness and sharpness.

An average particle diameter of titanium dioxide is preferably in the range of 0.1 to 0.4 μm. If the average particle diameter is less than 0.1 μm, it becomes difficult for titanium dioxide to mix uniformly in a film. On the contrary, if the average particle diameter exceeds 0.4 μm, sufficient whiteness cannot be obtained, and a protrusions form on the waterproof resin surface, adversely affecting image quality.

As the titanium dioxide, it is generally preferable to use titanium dioxide surface-treated with an inorganic substance such as water-containing aluminum oxide, water-containing silicon oxide or the like; titanium dioxide surface-treated with an organic substance such as a polyvalent aluminum, a polyvalent amine, a metallic soap, an alkyl titanate, a polysiloxane, or the like; or titanium dioxide surface-treated with both inorganic and organic substances, in order to suppress an activity and to prevent yellowing.

The titanium dioxide is kneaded into a waterproof resin with a kneader such as a two-roll, a three-roll, a kneader, a Banbury mixer, or the like, using a dispersing agent such as a higher fatty acid, a metal salt thereof, a higher fatty acid ethyl ester, a higher fatty acid amide, or the like.

The polyolefin resin coat layer on the front surface can contain proper amounts of a bluing agent, a fluorescent whitening agent, and others and the like. Examples of commonly known bluing agents include ultramarine blue, cobalt blue, cobalt oxyphosphate, quinacridone pigment, and the like.

The polyolefin resin can contain a tackifying resin or an adhesive resin to improve adhesiveness to the base paper substrate, and depending on the application, can contain an antioxidant, a releasing agent, a hollow polymer, and the like. Examples of the tackifying resin include a rosin derivative resin, a terpene resin, a cumaron-indene resin, and a petroleum hydrocarbon resin. Examples of the adhesive resin include an acid-modified polyolefin resin, an ionomer resin, an ethylene-acrylic acid copolymer resin and metal salts thereof.

In order to improve an adhesiveness of the polyolefin resin with the base paper, it is preferable to apply an activation treatment to the base paper, such as a corona discharge treatment, a flame treatment, a glow discharge treatment, and a plasma treatment, before coating the polyolefin resin on the base paper.

In the present invention, the anionic polyacrylamide and an epoxidized fatty acid amide are incorporated into the base paper containing the kraft pulp made from acacia in order to enhance size property.

A molecular weight of the anionic polyacrylamide is preferably in the range of 100,000 to 1,000,000.

A raw material fatty acid of the epoxidized fatty acid amide is preferably behenic acid.

A content of the anionic polyacrylamide is in the range of 0.05 to 1.5% by mass. Sufficient size property can be obtained with the anionic polyacrylamide in the range of 0.05 to 1.5% by mass in the presence of the epoxidized fatty acid amide.

A content of the epoxidized fatty acid amide is in the range of 0.05 to 0.8% by mass and particularly preferably in the range of 0.1 to 0.4% by mass. Sufficient size property can be obtained with the epoxidized fatty acid amide in the range of 0.05 to 0.8% by mass in the presence of the anionic polyacrylamide.

Moreover, for further enhanced size property in the present invention, an alkylketene dimer is preferably incorporated into a base paper. A content of the alkylketene dimer is preferably in the range of 0.1 to 0.6% by mass and particularly preferably in the range of 0.2 to 0.4% by mass.

For antistatic and anti-curling effects, preferably a back-coat layer is provided on the support for image recording material using the base paper of the invention. The back-coat layer can contain an inorganic antistatic agent, an organic antistatic agent, a hydrophilic binder, latex, a curing agent, a pigment, a surfactant and the like.

Various kinds of photographic layers are stacked by coating on the support for image recording material, which can be used in various kinds of applications, such as color photographic printing paper, black-and-white photographic printing paper, phototypographic photographic printing paper, reversal photographic material, silver salt diffusion transfer negatives and positives, printing materials and others. As a photographic layer, an emulsion layer can be provided, such as silver chloride, silver bromide, silver chlrobromide, silver iodobromide, silver chloroiodobromide and the like. A multiple silver halide photographic layer can be provided incorporating a color coupler into a silver halide photographic emulsion layer. Furthermore, a silver salt diffusion transfer image receiving layer can be provided incorporating physical development nucleus.

EXAMPLES

Below description of the present invention will be given by way of examples, but the invention is not limited to the examples.

*Examples 1 to 2 and Comparative Examples 1 to 3*

Paper material made by adjusting LBKP made from acacia having mass percentages shown in Table 1 to a canadian freeness of 300 ml using a disk refiner, and paper material made by adjusting LBKP made from aspen having mass percentages shown in Table 1 to a canadian freeness of 300 ml using a disk refiner were mixed so as to obtain blending ratios shown in Table 1.

Then, to the above pulp slurry, the following components were added in mass percentages relative to the pulp: 1.3% by mass of cationic starch (made by Nippon NSC Ltd.: trade name CATO 304L), mass percentages shown in Table 1 of an anionic polyacrylamide (made by Seiko Chemical Industries Co., Ltd.: trade name Polyacron ST-13) and an alkylketen dimer (made by Arakawa Chemical Industries, Ltd.: trade name Size Pine K), 0.05 % to 0.8% by mass of epoxidized behenamide and polyamide polyamine epichlorohydrin (made by Arakawa Chemical Industries, Ltd.: trade name of Arafix 100), and thereafter, 0.1% by mass of an antifoamer.

A pulp slurry prepared as described above was subjected to paper making with a long-mesh paper machine, a photographic emulsion coat surface of a web was pressed for drying to a drum dryer cylinder through a dryer canvas, a polyvinyl alcohol (made by Kuraray Co., Ltd.: trade name KL-118) was coated on both surfaces of the base paper with a size press with a basic weight of 1 g/m$^2$ to dry it, and calender treatment was carried out. The base paper was made with a basic weight of 166 g/m$^2$ to obtain a thickness of 160 μm.

Thereafter, by using a fusion extruding machine, a polyethylene having a density of 0.980 g/m$^2$ was coated to a thickness of 25 μm on a surface opposite to the surface of the base paper on which the above-described coating had been applied. Furthermore, a polyethylene having a density of 0.960 g/m$^2$ containing titanium oxide in an amount of 10% by mass was coated to a thickness of 25 μm on the surface opposite to the surface on which the polyethylene having a density of 0.980 g/m$^2$ was coated (the photographic emulsion coated side) to obtain a photographic printing paper support. A known gelatin silver halide photographic emulsion was coated on a front surface of the obtained photographic printing paper support and dried to form a photographic emulsion layer, thereby obtaining a photographic printing paper.

The obtained photographic printing paper was subjected to imagewise exposure and development to obtain a photograph. A smoothness (glossiness) of the front surface of the photograph was visually observed and compared with a photograph quality sample to make an evaluation using a scoring system ranging from 1 to 10 points, 1 point being the worst and 10 points being the best. Results are shown in Table 1.

Evaluation of size property was made using a Champion FA-120 PP-400B produced by Fuji Photo Film Co., Ltd., by observing permeation of a developing liquid at an edge surface. Results are shown in Table 1.

Table 1

|  | Example 1 | Example 2 | Comparative Example 3 | Compara tive Example 1 | Compara tive Example 2 |
|---|---|---|---|---|---|
| Acacia (% by mass) | 100 | 50 | 100 | | |
| aspen (% by mass) | | 50 | | 100 | 100 |
| anionic polyacrylamide (% by mass) | 0.145 | 0.145 | | | 0.145 |

Table continued

| | Example 1 | Example 2 | Comparative Example 3 | Compara tive Example 1 | Compara tive Example 2 |
|---|---|---|---|---|---|
| epoxidized fatty acid amide (% by mass) | 0.295 | 0.295 | 0.100 | 0.100 | 0.295 |
| alkylketene dimer (% by mass) | 0.285 | 0.285 | 0.450 | 0.450 | 0.285 |
| smoothness | 10 | 8 | 10 | 5 | 5 |
| size property | ◎ | ◎ | ○ | ◎ | ◎ |

As is shown by the results in Table 1, it is clear that by using pulp made from acacia, a support for image recording material excellent in smoothness and size property can be obtained.

The present invention provide a low-cost support for image recording material excellent in smoothness and size property, which can be obtained by using kraft pulp made from acacia instead of conventional photographic pulp made from maple, alder, or the like, and more preferably by incorporating an anionic polyacrylamide and an epoxidized fatty acid amide therein.

**Claims**

1. A support for image recording material, comprising a base paper, both surfaces of which are coated with at least one of a polyolefin resin and a polyester resin, wherein the base paper contains kraft pulp made from acacia as a component thereof, and wherein the base paper contains an anionic polyacrylamide in an amount of 0.05 to 1.5 % by mass and an epoxidized fatty acid amide in an amount of 0.05 to 0.8 % by mass

2. A support for image recording material according to claim 1. wherein pulp constituting the base paper contains the pulp made from acacia in an amount of 25 to 100 % by mass.

3. A support for image recording material according to claim 1, wherein the kraft pulp made from acacia is beaten so that a water retention value thereof is in a range of 150 to 180%.

4. A support for image recording material according to claim 1, wherein the base paper is calendered at a temperature in a range of 50 to 250°C under a pressure in a range of 50 to 300 kg/cm.

5. A support for image recording material according to claim 1, wherein a layer made of the polyolefin resin and having a thickness in a range of 15 to 40 $\mu$m is provided on the base paper.

6. A support for image recording material according to claim 1, wherein the base paper is subjected to a corona discharge treatment, a flame treatment, a glow discharge treatment or a plasma treatment before the base paper is coated with the polyolefin resin.

7. A support for image recording material according to claim 1, on which a back-coat layer is provided.

8. A support for image recording material according to claim 1, wherein the base paper contains an alkylketene dimer in an amount of 0.1 to 0.6 % by mass.

9. A support for image recording material according to claim 1, wherein a molecular weight of the anionic polyacrylamide is in a range of 100,000 to 1,000,000.

10. A support for image recording material according to claim 1, wherein a raw material of the epoxidized fatty acid amide is behenic acid.

**Patentansprüche**

1. Träger für ein Bildaufzeichnungsmaterial, umfassend ein Basispapier, bei dem beide Oberflächen mit zumindest einem von einem Polyolefinharz und einem Polyesterharz beschichtet sind, worin das Basispapier Kraftpulpe, erzeugt aus Akazie, als eine Komponente davon umfaßt und das Basispapier ein anionisches Polyacrylamid in einer Menge von 0,05 bis 1,5 Massen-% und ein epoxidiertes Fettsäureamid in einer Menge von 0,05 bis 0,8 Massen-% umfaßt.

2. Träger für ein Bildaufzeichnungsmaterial nach Anspruch 1, worin die Pulpe, die das Basispapier ausmacht, die Pule von Akazie in einer Menge von 25 bis 100 Massen-% enthält.

3. Träger für ein Bildaufzeichnungsmaterial nach Anspruch 1, worin die Kraftpulpe aus Akazie geschlagen wird, so daß der Wasserretentionswert im Bereich von 150 bis 180 % liegt.

4. Träger für ein Bildaufzeichnungsmaterial nach Anspruch 1, worin das Basispapier bei einer Temperatur im Bereich von 50 bis 250°C unter einem Druck im Bereich von 50 bis 300 kg/cm kalandert wird.

5. Träger für ein Bildaufzeichnungsmaterial nach Anspruch 1, worin eine Schicht aus dem Polyolefinharz und mit einer Dicke im Bereich von 15 bis 40 $\mu$m auf dem Basispapier vorgesehen ist.

6. Träger für ein Bildaufzeichnungsmaterial nach Anspruch 1, worin das Basispapier einer Koronaentladungsbehandlung, Flammbehandlung, Glühentladungsbehandlung oder Plasmabehandlung vor dem Beschichten des Basispapiers mit dem Polyolefinharz unterworfen ist.

7. Träger für ein Bildaufzeichnungsmaterial nach Anspruch 1, auf dem eine Rückschicht vorgesehen ist.

8. Träger für ein Bildaufzeichnungsmaterial nach Anspruch 1, worin das Basispapier ein Alkylketendimer in einer Menge von 0,1 bis 0,6 Massen-% enthält.

9. Träger für ein Bildaufzeichnungsmaterial nach Anspruch 1, worin ein Molekulargewicht des anionischen Polyacrylamids im Bereich von 100.000 bis 1.000.000 liegt.

10. Träger für ein Bildaufzeichnungsmaterial nach Anspruch 1, worin ein Ausgangsmaterial des epoxidierten Fettsäureamids Behensäure ist.

**Revendications**

1. Support pour matériau d'enregistrement d'images, comprenant un papier de base, dont les deux faces sont couchées avec au moins l'une d'une résine de polyoléfine et d'une résine de polyester, où le papier de base contient de la pâte kraft réalisée à partir d'acacia, en tant que composant de celle-ci, et
où le papier de base contient un polyacrylamide anionique dans une proportion de 0,05 à 1,5 % en masse et un amide d'acide gras traité à la résine époxy dans une proportion de 0,05 à 0,8 % en masse.

2. Support pour matériau d'enregistrement d'images selon la revendication 1, dans lequel la pâte constituant le papier de base contient la pâte réalisée à partir d'acacia dans une proportion de 25 à 100 % en masse.

3. Support pour matériau d'enregistrement d'images selon la revendication 1, dans lequel la pâte kraft réalisée à partir d'acacia est triturée de sorte qu'une valeur de rétention d'eau de celle-ci est dans une plage de 150 à 180 %.

4. Support pour matériau d'enregistrement d'images selon la revendication 1, dans lequel le papier de base est calandré à une température dans une plage de 50 à 250 °C sous une pression de 50 à 300 kg/cm.

5. Support pour matériau d'enregistrement d'images selon la revendication 1, dans lequel une couche faite de résine de polyoléfine et ayant une épaisseur dans une plage de 15 à 40 $\mu$m est disposée sur le papier de base.

6. Support pour matériau d'enregistrement d'images selon la revendication 1, dans lequel le papier de base est soumis à un traitement de décharge par effet corona, à un traitement à la flamme, à un traitement par décharge luminescente ou à un traitement par plasma avant que le papier de base ne soit couché avec de la résine de polyoléfine.

7. Support pour matériau d'enregistrement d'images selon la revendication 1, sur lequel une couche de revêtement au verso est prévue.

8. Support pour matériau d'enregistrement d'images selon la revendication 1, dans lequel le papier de base contient un dimère d'alkylcétène dans une proportion de 0,1 à 0,6 % en masse.

9. Support pour matériau d'enregistrement d'images selon la revendication 1, dans lequel la masse moléculaire du polyacrylamide anionique est dans une plage de 100 000 à 1 000 000.

10. Support pour matériau d'enregistrement d'images selon la revendication 1, dans lequel un matériau de base de l'amide d'acide gras traité à la résine époxy est de l'acide béhénique.